# EUROPEAN PATENT APPLICATION

(11) **EP 4 814 193 A1**
(43) Date of publication of application: **30.09.2026**
(21) Application number: 26164163.3
(22) Date of filing: 12.03.2026
(51) Int. Cl.: D06P 1/44, D06P 1/52, D06P 5/00, D06P 5/30

(54) **INK SET FOR FABRIC, LIQUID APPLICATION METHOD, LIQUID APPLICATION APPARATUS, AND RECORDED MATTER**

(30) Priority: 14.03.2025 JP 2025041325
(71) Applicant: Ricoh Company, Ltd., Tokyo 143-8555 (JP)
(72) Inventor: NAKAGAWA, Tomohiro, Tokyo, 143-8555 (JP); KOBAYASHI, Hiroki, Tokyo, 143-8555 (JP); HYAKUTAKE, Daiki, Tokyo, 143-8555 (JP); AOYAMA, Yuka, Tokyo, 143-8555 (JP)
(74) Representative: SSM Sandmair

(57) **Abstract**

An ink set for fabric is provided including: a pre-treatment liquid including a resin A and an organic acid; and a pigment ink including a resin B. A dried film of the pre-treatment liquid has a glass transition temperature TgA of 10°C or higher and 60°C or lower, and a dried film of the pigment ink has a glass transition temperature TgB of -20°C or lower.

## Description

### BACKGROUND

### Technical Field

The present disclosure relates to an ink set for fabric, a liquid application method, a liquid application apparatus, and a recorded matter.

### Related Art

Inkjet printers have advantages such as low noise, low running costs, and easy color printing, making them widely used in homes as digital signal output apparatuses.

In recent years, there has been a growing demand for inkjet recording methods that can achieve image quality comparable to traditional analog printing, not only for household use, but also for low-permeability media such as coated paper, non-absorbing media such as plastic films, and fabrics such as woven and knitted fabrics.

In the textile printing field, the market size for printing directly onto clothing such as T-shirts and unsewn fabric substrates using water-based ink is expanding year by year. In addition to the traditional cotton and cotton-polyester blend media, the rapidly growing demand for sportswear has created a need for compatibility with polyester-based media. As a result, there is growing demand for inkjet recording systems that can form images with excellent color development and various fastness properties on a variety of materials, including cotton and polyester.

Dye ink using reactive or acid dyes are widely used in these fields, but dye ink has a disadvantage of placing a heavy burden on the environment, as it requires a post-processing step of washing with large amounts of water.

Accordingly, expectations are increasing for pigment ink, which is simple to prepare, requiring only a heating step as a post-treatment, and also exhibits the versatility to be compatible with a variety of substrates, in view of the growing demand for such substrate compatibility as mentioned above.

For the pigment ink, it is common practice that, in the case of chemical fibers such as polyester, which have no water absorbency, a liquid containing a component that aggregates the ink (hereinafter sometimes referred to as a "pre-treatment liquid") is applied to the substrate in advance to prevent bleeding so that the solid content is retained on the surface to form an image.

However, although the apparent image quality is improved by such a technique, peeling of an image when a load is applied to the printed matter tends to be deteriorated due to the pigment remaining on the surface.

In order to address such issues, various types of ink or ink sets have been disclosed, for example, in Japanese Patent No. 7052208 and Japanese Patent Application Publication No. 2023-88510. However, there is still a problem in that the effect is insufficient from the standpoint of fastness.

### SUMMARY

An object of the present invention is to provide an ink set for fabric that can provide high fastness.

The present disclosure described herein provides an ink set for fabric including: a pre-treatment liquid including a resin A and an organic acid; and a pigment ink including a resin B. A dried film of the pre-treatment liquid has a glass transition temperature TgA of 10°C or higher and 60°C or lower, and a dried film of the pigment ink has a glass transition temperature TgB of -20°C or lower.

According to one aspect of the present invention, an ink set for fabric that can provide high fastness is provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a perspective explanatory view of a liquid application apparatus according to one embodiment of the present invention; and
FIG. 2 is a perspective explanatory view of a main tank in a liquid application apparatus according to one embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Ink set for fabric)

An ink set for fabric according to one embodiment of the present invention includes a pre-treatment liquid and a pigment ink, and may further include other components as necessary. The ink set for fabric according to one embodiment of the present invention is applied to a fabric serving as a substrate.

The inventors of the present invention have conducted extensive studies and found that the wet-rubbing fastness tends to improve as the glass transition temperature TgB of a resin B added to the pigment ink decreases, and that a practically sufficient level is achieved when the TgB is -20°C or lower. This is thought to be because when the glass transition temperature TgB is sufficiently low, a dried film of the resulting pigment ink becomes flexible and tenacious, thereby increasing resistance against physical forces.

On the other hand, it has been also found that the pigment ink using such a resin exhibits increased image peeling during washing, resulting in poor washing fastness. This is because the dried film of the pigment ink obtained with a resin having a low glass transition temperature is susceptible to swelling in the presence of a large amount of water or an aqueous solution, and the swollen ink film undergoes a reduction in mechanical strength.

Based on the above, the inventors of the present invention have conceived that it is possible to achieve both types of fastness by using different resins having different roles in the pigment ink and the pre-treatment liquid, thereby allowing a layer in the vicinity of the substrate to be formed with strong water resistance and a layer at the interface with the external environment to be formed with high physical resistance in the dried film.

### <Pre-treatment liquid>

The pre-treatment liquid includes at least an organic acid and a resin A, and may further include other components as necessary.

The glass transition temperature TgA of a dried film of the pre-treatment liquid is 10°C or higher and 60°C or lower.

### <<Organic acid>>

The organic acid is not particularly limited and can be appropriately selected depending on the purpose. However, a carboxylic acid having 6 or less carbon atoms is preferable as it has high solubility in water, can prevent separation between water and the carboxylic acid during long-term storage, and can improve the stability of the pre-treatment liquid.

Examples of the carboxylic acid having 6 or less carbon atoms include, but are not limited to, a saturated fatty acid such as formic acid, acetic acid, propionic acid, butyric acid, valeric acid, or hexanoic acid, and a hydroxy acid such as lactic acid, malic acid, or citric acid.

The carbon chain may be linear or branched, and may be saturated or unsaturated. Among these, lactic acid, citric acid, and acetic acid are preferably used because they are inexpensive and exhibit high safety.

An organic acid is preferably used as an aggregating agent in the pre-treatment liquid as this can maintain appropriate reactivity with the pigment ink and provide particularly excellent fastness.

The content of the organic acid is not particularly limited and can be appropriately selected depending on the purpose. However, the content is preferably 1% by mass or more and 50% by mass or less, more preferably 2% by mass or more and 15% by mass or less, relative to the total amount of the pre-treatment liquid. When the content of the organic acid is 1% by mass or more, aggregation of the pigment can be induced to prevent image bleeding, and when it is 50% by mass or less, the pigment does not remain excessively on the surface of the fabric, making it easy to maintain rubbing fastness.

### <<Resin A>>

The resin A is not particularly limited and can be appropriately selected depending on the purpose. However, from the standpoint of stability in the pre-treatment liquid including the organic acid, a cationic resin is preferable. The cationic resin is preferably added in the form of a resin emulsion in which resin particles are dispersed in water as a dispersion medium, and is preferably of a self-emulsifying type.

A cationic component of the cationic resin is not particularly limited and can be appropriately selected depending on the purpose. However, a quaternary ammonium salt is preferable because it exhibits excellent dispersion stability in a liquid.

The resin particles included in the cationic resin are not particularly limited and can be appropriately selected depending on the purpose. However, an acrylic resin (hereinafter sometimes referred to as "cationic acrylic resin particles"), a urethane resin (hereinafter sometimes referred to as "cationic urethane resin particles"), and the like are preferable. A urethane resin is more preferable because it imparts superior hand feel and fastness to the recorded matter.

Whether the resin particles included in the cationic resin are urethane resins can be confirmed by determining whether the mass spectrum of the dried solid product of the pre-treatment liquid matches the mass spectrum of a compound having an isocyanate group. The mass spectrum can be detected by the pyrolysis gas chromatography-mass spectrometry method.

As a pyrolysis gas chromatography-mass spectrometry apparatus used in the pyrolysis gas chromatography-mass spectrometry method, measurement can be performed using, for example, a series of instruments directly connected to each other, including a thermal analysis apparatus (model name: Py-3030D, manufactured by Frontier Laboratories Ltd.), a GC analysis apparatus (model name: 7890B, manufactured by Agilent Technologies), and an MS analysis apparatus (model name: Q1500, manufactured by JEOL Ltd.).

The resin particles may be synthesized as appropriate or commercially available products. Further, these resin particles may be used alone or in combination of two or more types.

A method for synthesizing the cationic resin particles is not particularly limited, and any known synthesis method can be employed.

It is preferable that the resin A is cationic urethane resin particles. The cationic urethane resin particles can be produced using a polyol, a polyisocyanate, and a polyol containing a tertiary amino group. Specifically, a urethane prepolymer having an isocyanate group at the terminal end is first produced by reacting the polyol, the polyisocyanate, and the separately prepared polyol containing a tertiary amino group, either in a solvent or in the absence of a solvent. Subsequently, the urethane prepolymer is chain-extended using a polyamine to prepare a urethane resin-based particle dispersion liquid. Then, the tertiary amino group in the urethane resin-based particle dispersion liquid is neutralized with an acid or quaternized with a quaternizing agent. Through this process, cationic urethane resin particles can be produced.

As another example of the method for producing the cationic urethane resin particles, a polyurethane may be produced by reacting the polyol, the polyisocyanate, and the polyol containing a tertiary amino group, either in a solvent or in the absence of a solvent, and then the tertiary amino group in the polyurethane may be neutralized with an acid or quaternized with a quaternizing agent.

The polyol containing a tertiary amino group can be produced by the following method.

First, a compound having two epoxy groups in one molecule and a secondary amine are blended such that the amount of NH groups is equimolar to the amount of epoxy groups. Next, by subjecting the mixture to a ring-opening addition reaction at about 20°C or under heating, a polyol containing a tertiary amino group can be produced.

Examples of the compound having two epoxy groups in one molecule include, but are not limited to, ethanediol 1,2-diglycidyl ether, propanediol 1,2-diglycidyl ether, propanediol 1,3-diglycidyl ether, butanediol 1,4-diglycidyl ether, pentanediol 1,5-diglycidyl ether, 3-methyl-pentanediol 1,5-diglycidyl ether, neopentyl glycol diglycidyl ether, hexanediol 1,6-diglycidyl ether, polybutadiene glycol diglycidyl ether, cyclohexanediol 1,4-diglycidyl ether, diglycidyl ether of 2,2-bis(4-hydroxycyclohexyl) propane (hydrogenated bisphenol A), and diglycidyl ether of a mixture of isomers of hydrogenated dihydroxydiphenylmethane (hydrogenated bisphenol F).

Examples of the acid for neutralizing the tertiary amino group in the urethane resin-based particle dispersion liquid or the tertiary amino group in the polyurethane include, but are not limited to, an aliphatic di- or tricarboxylic acid such as malonic acid, succinic acid, tartaric acid, oxalic acid, glutaric acid, adipic acid, pimelic acid, suberic acid, azelaic acid, sebacic acid, alkylsuccinic acid, linolenic acid, maleic acid, fumaric acid, mesaconic acid, citraconic acid, itaconic acid, citric acid, or isocitric acid, an organic acid such as phthalic acid, naphthalenedicarboxylic acid, biphenyldicarboxylic acid, or tetrahydrophthalic acid, an organic sulfonic acid such as sulfonic acid, p-toluenesulfonic acid, or methanesulfonic acid, and an inorganic acid such as phosphoric acid, boric acid, phosphorous acid, hydrochloric acid, sulfuric acid, or nitric acid. One or more of these may be used.

Examples of the quaternizing agent for quaternizing the tertiary amino group in the urethane resin-based particle dispersion liquid or the tertiary amino group in the polyurethane include, but are not limited to, a dialkyl sulfate such as dimethyl sulfate or diethyl sulfate, an alkyl or aryl sulfonate methyl compound such as methyl methanesulfonate or methyl p-toluenesulfonate, an epoxy such as ethylene oxide, propylene oxide, butylene oxide, styrene oxide, epichlorohydrin, allyl glycidyl ether, butyl glycidyl ether, 2-ethylhexyl glycidyl ether, or phenyl glycidyl ether, and an alkyl halide such as methyl chloride, ethyl chloride, benzyl chloride, methyl bromide, ethyl bromide, benzyl bromide, methyl iodide, ethyl iodide, or benzyl iodide. One or more of these may be used.

The cationic acrylic resin particles can be produced by emulsion polymerization of vinyl monomers using a cationic emulsifier from materials such as (meth)acrylic monomers, styrene, and α-methylstyrene, by emulsion polymerization of vinyl monomers using a polymer having a cationic group as a protective colloid, or by reverse-phase emulsion polymerization of cationic water-soluble monomers.

Note that, in the present specification, the term "(meth)acrylic" refers to either an acrylic compound or the corresponding methacrylic compound.

Further, the cationic acrylic resin particles may be produced from the above materials by using a cationic surfactant as an emulsion stabilizer.

Examples of the cationic surfactant include, but are not limited to, a laurylamine salt, a stearyltrimethylenediamine salt, an octadecylamine salt, laurylpyridinium chloride, stearylammonium chloride, dioleylammonium chloride, and octylbenzyltrimethylammonium chloride.

The cationic acrylic resin particles may also be produced by first carrying out emulsion polymerization of the above materials using a nonionic surfactant, and then adding a cationic substance such as, for example, a cationic surfactant, polyoxyethylene alkylamine, or polyethyleneimine.

The cationic acrylic resin particles may also be produced by radical copolymerization of an N-substituted aminoalkyl (meth)acrylate such as dimethylaminoethyl (meth)acrylate or diethylaminoethyl (meth)acrylate, or an N-substituted aminoalkyl (meth)acrylamide such as dimethylaminopropyl (meth)acrylamide, with other (meth)acrylic monomers, styrene, α-methylstyrene, and the like followed by quaternization with an alkylating agent.

Generally, the cationic acrylic resin particles are produced from the above materials by solution polymerization using a solvent or by emulsion polymerization using an emulsifier. Examples of an alkylating agent used in the solution polymerization or emulsion polymerization include, but are not limited to, octyl chloride, octyl bromide, dodecyl chloride, dodecyl bromide, tetradecyl chloride, tetradecyl bromide, hexadecyl chloride, and hexadecyl bromide.

As described above, a commercially available product may also be used as the cationic resin particles.

Examples of the commercially available product include, but are not limited to, SUPERFLEX 620 and 650 manufactured by DKS Co. Ltd., HYDRAN CP-7520 and CP-7610 manufactured by DIC Corp., PERMARIN UC-20 manufactured by Sanyo Chemical Industries, Ltd., VINYBLAN 2687 manufactured by Nissin Chemical Co., Ltd., and MOWINYL M-9410 manufactured by Japan Coating Resin Co., Ltd.

The solid content of the resin A is not particularly limited and can be appropriately selected depending on the purpose. However, the content is preferably 1% by mass or more and 20% by mass or less, more preferably 5% by mass or more and 20% by mass or less, relative to the total amount of the pre-treatment liquid. When the solid content of the resin A is 1% by mass or more and 20% by mass or less, sufficient color development and an improvement in rubbing fastness can be obtained without impairing the ejection reliability.

The solid content of the resin A can be determined by calculating the resin ratio relative to the pigment based on thermogravimetric (TG) data using a thermogravimetry-differential thermal analysis apparatus (product name: ThermoPlus, manufactured by Rigaku Holdings Corp.). Specifically, about 15 mg of the ink film (hereinafter sometimes referred to as a "dried film") was heated to 500°C at a rate of 10 °C/min under a nitrogen atmosphere using the thermogravimetry-differential thermal analysis apparatus, thereby obtaining TG data. The resin amount is defined as the amount of weight loss occurring between 200°C and 500°C under the nitrogen atmosphere. The amount added can be determined based on the resin amount relative to the initial charged amount.

The average particle diameter of the resin particles of the resin A is preferably 10 nm or more and 300 nm or less, more preferably 20 nm or more and 200 nm or less. When the average particle diameter of the resin particles of the resin A is 10 nm or more and 300 nm or less, penetration into the ink layer is prevented and the smoothness of the finally formed coating layer is improved, thereby facilitating color development and rubbing fastness.

As a physical property of the pre-treatment liquid, the glass transition temperature TgA of the dried film is 10°C or higher and 60°C or lower, preferably 20°C or higher and 60°C or lower. When the glass transition temperature TgA is 10°C or higher, excellent washing fastness to a polyester substrate can be achieved. When the glass transition temperature TgA is 60°C or lower, the coating film does not become excessively hard, allowing the recorded matter to maintain the flexibility needed to withstand crumpling or rubbing inside a washing machine. Further, when the glass transition temperature TgA is 20°C or higher, sufficient water resistance can be imparted to the final recorded matter, resulting in excellent washing fastness.

### <Glass transition temperature measurement>

The glass transition temperature can be measured using a differential scanning calorimeter such as DSC System Q-2000 (manufactured by TA Instruments). Specifically, the pre-treatment liquid is placed in a Teflon (registered trademark) dish and sufficiently dried, and about 5.0 mg of the dried material is placed in an aluminum sample container. The measurement is performed under a nitrogen atmosphere under the following heating conditions (1) to (4). The midpoint glass transition temperature calculated from the DSC curve obtained during the second heating is defined as the glass transition temperature of the dried solid product of the pre-treatment liquid.
(1) Cool to -80°C and hold for 5 minutes
(2) Heat to 160°C at 10 °C/min
(3) Cool to -80°C and hold for 5 minutes
(4) Heat to 200°C at 10 °C/min

Other physical properties of the pre-treatment liquid can be appropriately selected depending on the purpose, and the physical properties of the pre-treatment liquid depending on the application method are not particularly limited and can be appropriately adjusted.

### <<Other components>>

The other components are not particularly limited and can be appropriately selected depending on the purpose. Examples thereof include, but are not limited to, a water-soluble organic solvent, a surfactant, a defoaming agent, a preservative/antifungal agent, and a rust inhibitor.

### -Organic solvent-

The organic solvent is not particularly limited and can be appropriately selected depending on the purpose, and a water-soluble organic solvent can be used. Example thereof include a polyhydric alcohol, an ether such as a polyhydric alcohol alkyl ether or a polyhydric alcohol aryl ether, a nitrogen-containing heterocyclic compound, an amide, an amine, and a sulfur-containing compound.

Specific examples of the water-soluble organic solvent include, but are not limited to, a polyhydric alcohol such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, or petriol; a polyhydric alcohol alkyl ether such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, or propylene glycol monoethyl ether; a polyhydric alcohol aryl ether such as ethylene glycol monophenyl ether or ethylene glycol monobenzyl ether; a nitrogen-containing heterocyclic compound such as 2-pyrrolidone, N-methyl-2-pyrrolidone, N-hydroxyethyl-2-pyrrolidone, 1,3-dimethyl-2-imidazolidinone, ε-caprolactam, or γ-butyrolactone; an amide such as formamide, N-methylformamide, N,N-dimethylformamide, 3-methoxy-N,N-dimethylpropionamide, or 3-butoxy-N,N-dimethylpropionamide; an amine such as monoethanolamine, diethanolamine, or triethylamine; a sulfur-containing compound such as dimethyl sulfoxide, sulfolane, or thiodiethanol; propylene carbonate; and ethylene carbonate.

It is preferable to use the organic solvent having a boiling point of 250°C or lower, since it not only functions as a wetting agent but also provides good drying properties.

The content of the organic solvent is not particularly limited and can be appropriately selected depending on the purpose. From the standpoint of ensuring the stability of the ejection or coating of the pre-treatment liquid while maintaining good drying properties of the final printed matter, the content is preferably 10% by mass or more and 60% by mass or less, more preferably 20% by mass or more and 60% by mass or less, relative to the total amount of the pre-treatment liquid.

### -Surfactant-

Any of a silicone-based surfactant, a fluorine-based surfactant, an amphoteric surfactant, a nonionic surfactant, and an anionic surfactant can be used as the surfactant.

The silicone-based surfactant is not particularly limited and can be appropriately selected depending on the purpose.

Among them, those that do not decompose even at high pH are preferable. Examples thereof include, but are not limited to, a side-chain-modified polydimethylsiloxane, a both-end-modified polydimethylsiloxane, a one-end-modified polydimethylsiloxane, and a side-chain/both-end-modified polydimethylsiloxane. Those having a polyoxyethylene group or a polyoxyethylene polyoxypropylene group as a modifying group are particularly preferable since they exhibit good properties as aqueous surfactants. Further, a polyether-modified silicone-based surfactant can also be used as the silicone-based surfactant. Examples thereof include, but are not limited to, a compound in which a polyalkylene oxide structure is introduced into the Si side chain of dimethylsiloxane.

As the fluorine-based surfactant, for example, a perfluoroalkylsulfonic acid compound, a perfluoroalkylcarboxylic acid compound, a perfluoroalkylphosphate ester compound, a perfluoroalkylethylene oxide adduct, and a polyoxyalkylene ether polymer compound having a perfluoroalkyl ether group in a side chain are particularly preferable because they exhibit low foaming properties. Examples of the perfluoroalkylsulfonic acid compound include, but are not limited to, a perfluoroalkylsulfonic acid and a perfluoroalkylsulfonic acid salt. Examples of the perfluoroalkylcarboxylic acid compound include, but are not limited to, a perfluoroalkylcarboxylic acid and a perfluoroalkylcarboxylic acid salt. Examples of the polyoxyalkylene ether polymer compound having a perfluoroalkyl ether group in a side chain include, but are not limited to, a sulfate ester salt of polyoxyalkylene ether polymer having a perfluoroalkyl ether group in a side chain and a salt of polyoxyalkylene ether polymer having a perfluoroalkyl ether group in a side chain. Examples of a counter ion for the salts of these fluorine-based surfactants include, but are not limited to, Li, Na, K, NH₄, NH₃CH₂CH₂OH, NH₂(CH₂CH₂OH)₂, and NH(CH₂CH₂OH)₃.

Examples of the amphoteric surfactant include, but are not limited to, a laurylamino propionic acid salt, lauryldimethylbetaine, stearyldimethylbetaine, and lauryldihydroxyethylbetaine.

Examples of the nonionic surfactant include, but are not limited to, a polyoxyethylene alkylphenyl ether, a polyoxyethylene alkyl ester, a polyoxyethylene alkylamine, a polyoxyethylene alkylamide, a polyoxyethylene-polypropylene block polymer, a sorbitan fatty acid ester, a polyoxyethylene sorbitan fatty acid ester, and an ethylene oxide adduct of acetylenic alcohol. Examples of the anionic surfactant include, but are not limited to, a polyoxyethylene alkyl ether acetic acid salt, a dodecylbenzenesulfonic acid salt, a lauric acid salt, and a salt of polyoxyethylene alkyl ether sulfuric acid. These may be used alone or in combination of two or more types.

The content of the surfactant is not particularly limited and can be appropriately selected depending on the purpose. From the standpoints of providing excellent wettability and ejection stability and improving image quality, the surfactant content is preferably 0.001% by mass or more and 5% by mass or less, more preferably 0.05% by mass or more and 5% by mass or less, relative to the total amount of the pre-treatment liquid.

The defoaming agent is not particularly limited, and examples thereof include, but are not limited to, a silicone-based defoaming agent, a polyether-based defoaming agent, and a fatty acid ester-based defoaming agent. These may be used alone or in combination of two or more types. Among them, a silicone-based defoaming agent is preferable because of its excellent defoaming effects.

### -Preservative/antifungal agent-

The preservative/antifungal agent is not particularly limited, and examples thereof include, but are not limited to, 1,2-benzisothiazolin-3-one.

### -Rust inhibitor-

The rust inhibitor is not particularly limited, and examples thereof include, but are not limited to, an acid sulfite and sodium thiosulfate.

### <Pigment ink>

The pigment ink includes at least a pigment and the resin B, and may further include other components as needed.

The glass transition temperature TgB of a dried film of the pigment ink is -20°C or lower.

### <<Pigment>>

As the pigment, an inorganic pigment or an organic pigment can be used. These may be used alone or in combination of two or more types. Further, a mixed crystal may also be used.

Examples of the pigment that can be used include, but are not limited to, a black pigment, a yellow pigment, a magenta pigment, a cyan pigment, a white pigment, a green pigment, an orange pigment, and a glossy or metallic pigment such as a gold or silver pigment.

Examples of the inorganic pigment that can be used include titanium oxide, iron oxide, calcium carbonate, barium sulfate, aluminum hydroxide, barium yellow, cadmium red, and chrome yellow, as well as carbon black produced by a known method such as the contact method, the furnace method, or the thermal method.

Further, examples of the organic pigment that can be used include, but are not limited to, an azo pigment, a polycyclic pigment (e.g., a phthalocyanine pigment, a perylene pigment, a perinone pigment, an anthraquinone pigment, a quinacridone pigment, a dioxazine pigment, an indigo pigment, a thioindigo pigment, an isoindolinone pigment, a quinophthalone pigment, etc.), a dye chelate (e.g., a basic dye type chelate, an acid dye type chelate, etc.), a nitro pigment, a nitroso pigment, and aniline black. Among these pigments, those having good affinity with the solvent are preferably used. In addition, resin hollow particles and inorganic hollow particles can also be used.

Specific examples of the pigment for black include carbon black (C.I. Pigment Black 7) such as furnace black, lamp black, acetylene black, or channel black, a metal-based pigment such as copper, iron (C.I. Pigment Black 11), or titanium oxide, and an organic pigment such as aniline black (C.I. Pigment Black 1).

Further, examples of the pigment for color include, but are not limited to, C.I. Pigment Yellow 1, 3, 12, 13, 14, 17, 24, 34, 35, 37, 42 (Iron Oxide Yellow), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2 (Permanent Red 2B(Ca)), 48:3, 48:4, 49:1, 52:2, 53:1, 57:1 (Brilliant Carmine 6B), 60:1, 63:1, 63:2, 64:1, 81, 83, 88, 101 (Iron Oxide Red), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4 (Phthalocyanine Blue), 16, 17:1, 56, 60, and 63; and C.I. Pigment Green 1, 4, 7, 8, 10, 17, 18, and 36.

From the standpoints of improving image density and achieving good fixability and ejection stability, the content of the pigment is preferably 0.1% by mass or more and 15% by mass or less, more preferably 1% by mass or more and 10% by mass or less.

To disperse the pigment in the ink, a method such as introducing hydrophilic functional groups into the pigment to make it a self-dispersible pigment, coating the surface of the pigment with a resin to disperse it, or dispersing the pigment using a dispersant can be mentioned.

As the method for introducing hydrophilic functional groups into the pigment to obtain a self-dispersible pigment, there may be used, for example, a self-dispersible pigment in which functional groups such as a sulfonic group or a carboxyl group are added to the pigment (e.g., carbon) so that the pigment becomes dispersible in water.

As the method for dispersing the pigment by coating its surface with a resin, there may be used a pigment which is encapsulated in microcapsules and made dispersible in water. Such a pigment can also be referred to as a resin-coated pigment. In this case, it is not necessary for all of the pigments included in the ink to be coated with resin, and uncoated or partially coated pigments may be present in the ink within a range that does not impair the effects.

Example of the method for dispersing the pigment using a dispersant include a method in which a known low molecular weight dispersant or a known high molecular weight dispersant, represented by a surfactant, is used for dispersion.

As the dispersant, for example, an anionic surfactant, a cationic surfactant, an amphoteric surfactant, a nonionic surfactant, or the like can be used depending on the pigment.

RT-100 (nonionic surfactant) manufactured by Takemoto Oil & Fat Co., Ltd. or sodium naphthalenesulfonate formalin condensate can also be suitably used as the dispersant.

The dispersant may be used alone or in combination of two or more types.

The ink can be obtained by mixing the pigment with a material such as water or an organic solvent. Alternatively, the ink can be produced by first preparing a pigment dispersion by mixing the pigment with other components such as water and a dispersant, and then mixing the pigment dispersion with a material such as water or an organic solvent.

The pigment dispersion can be obtained by dispersing water, a pigment, a pigment dispersant, and, if necessary, other components, followed by adjusting the particle diameter. It is preferable to perform the dispersion using a dispersing machine.

The particle diameter of the pigment in the pigment dispersion is not particularly limited. However, from the standpoints of achieving good dispersion stability of the pigment and improving ejection stability and image quality such as image density, the maximum frequency particle diameter of the pigment, expressed in terms of the number of particles, is preferably 20 nm or more and 500 nm or less, more preferably 20 nm or more and 150 nm or less. The particle diameter of the pigment can be measured using a particle size analyzer (NANOTRAC WAVE-UT151, manufactured by MicrotracBEL Corp.).

The content of the pigment in the pigment dispersion is not particularly limited and can be appropriately selected depending on the purpose. However, from the standpoints of obtaining good ejection stability and improving image density, the pigment content is preferably 0.1% by mass or more and 50% by mass or less, more preferably 0.1% by mass or more and 30% by mass or less.

It is preferable, as necessary, to remove coarse particles of the pigment dispersion using a filter, a centrifuge, or the like and to perform degassing.

### <Resin B>

The resin B is not particularly limited and can be appropriately selected depending on the purpose. However, an anionic resin is preferable from the standpoint of effectively reacting with the pre-treatment liquid. The anionic resin is preferably added in the form of a resin emulsion in which resin particles are dispersed in water as a dispersion medium, and is preferably of a self-emulsifying type.

The resin particles included in the anionic resin are not particularly limited and can be appropriately selected depending on the purpose. An acrylic resin (hereinafter sometimes referred to as "anionic acrylic resin particles") and a urethane resin (hereinafter sometimes referred to as "anionic urethane resin particles") are preferable, and a urethane resin is more preferable from the standpoint of imparting superior hand feel and fastness to the recorded matter.

The term "urethane resin" refers to polyurethane resin particles obtained by reacting a polyol such as a polycarbonate polyol, a polyester polyol, or a polyether polyol with a polyisocyanate. Whether the resin particles included in the anionic resin are urethane resins can be confirmed by determining whether the mass spectrum of the dried solid product of the pigment ink matches the mass spectrum of a compound having an isocyanate group. Note that the mass spectrum can be detected by pyrolysis gas chromatography-mass spectrometry method.

### -Polycarbonate polyol-

As the polycarbonate polyol, there may be used, for example, those obtained by subjecting a carbonate ester and a polyol to a transesterification reaction in the presence of a catalyst, or those obtained by reacting phosgene with bisphenol A.

Examples of the carbonate ester that can be used include, but are not limited to, methyl carbonate, dimethyl carbonate, ethyl carbonate, diethyl carbonate, cyclocarbonate, and diphenyl carbonate. Examples of the polyol that is reacted with the carbonate ester include, but are not limited to, a low molecular weight diol compound such as ethylene glycol, diethylene glycol, 1,2-propylene glycol, dipropylene glycol, 1,4-butanediol, 1,5-pentanediol, 3-methyl-1,5-pentanediol, neopentyl glycol, or 1,4-cyclohexanediol, as well as polyethylene glycol and polypropylene glycol.

### -Polyether polyol-

Examples of the polyether polyol include, but are not limited to, those obtained by addition polymerization of alkylene oxide with at least one compound having two or more active hydrogen atoms as a starting material.

Examples of the compound having two or more active hydrogen atoms include, but are not limited to, ethylene glycol, diethylene glycol, triethylene glycol, propylene glycol, trimethylene glycol, 1,3-butanediol, 1,4-butanediol, 1,6-hexanediol, glycerin, trimethylolethane, and trimethylolpropane. These may be used alone or in combination of two or more types.

### -Polyester polyol-

Examples of the polyester polyol include, but are not limited to, those obtained by an esterification reaction of a low molecular weight polyol and a polycarboxylic acid, a polyester obtained by a ring-opening polymerization reaction of a cyclic ester compound such as ε-caprolactone, and copolymer polyesters of these compounds. These may be used alone or in combination of two or more types.

Examples of the low molecular weight polyol include, but are not limited to, ethylene glycol and propylene glycol. These may be used alone or in combination of two or more types.

Examples of the polycarboxylic acid include, but are not limited to, succinic acid, adipic acid, sebacic acid, dodecanedicarboxylic acid, terephthalic acid, isophthalic acid, phthalic acid, and anhydrides or ester-forming derivatives of these compounds. These may be used alone or in combination of two or more types.

### -Polyisocyanate-

Examples of the polyisocyanate include, but are not limited to, an aromatic diisocyanate such as phenylenediisocyanate, tolylenediisocyanate, diphenylmethanediisocyanate, or naphthalenediisocyanate; and an aliphatic or alicyclic diisocyanate such as hexamethylenediisocyanate, lysinediisocyanate, cyclohexanediisocyanate, isophoronediisocyanate, dicyclohexylmethanediisocyanate, xylylenediisocyanate, tetramethylxylylenediisocyanate, or 2,2,4-trimethylhexamethylenediisocyanate. These may be used alone or in combination of two or more types. Among these, an alicyclic diisocyanate is preferable from the standpoint of long-term weather resistance, because the ink according to an embodiment of the present invention is also used for outdoor applications such as posters and signboards and therefore requires a coating film having very high long-term weather resistance.

The polyurethane resin particles can be obtained by a conventionally used production method. Examples thereof include, but are not limited to, the following method.

First, under solvent-free conditions or in the presence of an organic solvent, the polyol and the polyisocyanate are reacted at an equivalent ratio in which the isocyanate groups are in excess, thereby producing an isocyanate-terminated urethane prepolymer.

Next, the anionic groups in the isocyanate-terminated urethane prepolymer are neutralized with a neutralizing agent as necessary, and then the prepolymer is reacted with a chain extender. Finally, the organic solvent in the system is removed, if necessary, to obtain the polyurethane resin particles.

Examples of the organic solvent that can be used for producing the polyurethane resin particles include, but are not limited to, a ketone such as acetone or methyl ethyl ketone; an ether such as tetrahydrofuran or dioxane; an acetate ester such as ethyl acetate or butyl acetate; a nitrile such as acetonitrile; and an amide such as dimethylformamide, N-methylpyrrolidone, or N-ethylpyrrolidone.

These may be used alone or in combination of two or more types.

Examples of the chain extender include, but are not limited to, a polyamine and other compounds containing active hydrogen groups.

Examples of the polyamine include, but are not limited to, a diamine such as ethylenediamine, 1,2-propanediamine, 1,6-hexamethylenediamine, piperazine, 2,5-dimethylpiperazine, isophoronediamine, 4,4'-dicyclohexylmethanediamine, or 1,4-cyclohexanediamine; a polyamine such as diethylenetriamine, dipropylenetriamine, or triethylenetetramine; a hydrazine such as hydrazine, N,N'-dimethylhydrazine, or 1,6-hexamethylenebishydrazine; and a dihydrazide such as succinic dihydrazide, adipic dihydrazide, glutaric dihydrazide, sebacic dihydrazide, or isophthalic dihydrazide. These may be used alone or in combination of two or more types.

Examples of other compounds containing active hydrogen groups include, but are not limited to, a glycol such as ethylene glycol, diethylene glycol, triethylene glycol, propylene glycol, 1,3-propanediol, 1,3-butanediol, 1,4-butanediol, hexamethylene glycol, sucrose, methylene glycol, glycerin, or sorbitol; a phenol such as bisphenol A, 4,4'-dihydroxydiphenyl, 4,4'-dihydroxydiphenyl ether, 4,4'-dihydroxydiphenyl sulfone, hydrogenated bisphenol A, or hydroquinone; and water. These may be used alone or in combination of two or more types, provided that the storage stability of the ink is not impaired.

Commercially available polyurethane resin particles may also be used. Examples thereof include, but are not limited to, U-COAT UWS-145 and PERMARIN UA-200 (both manufactured by Sanyo Chemical Industries, Ltd.), and SUPERFLEX 130 and SUPERFLEX 210 (both manufactured by DKS Co. Ltd.). These may be used alone or in combination of two or more types.

The content of the resin B is not particularly limited and can be appropriately selected depending on the purpose. However, the content is preferably 1% by mass or more and 20% by mass or less, more preferably 5% by mass or more and 20% by mass or less, relative to the total mass of the pigment ink. When the content of the resin B is 1% by mass or more and 20% by mass or less, the effect of improving wet-rubbing fastness can be obtained without impairing the ejection reliability. The content of the resin B can be calculated using a thermogravimetry-differential thermal analysis apparatus in the same manner as for the pre-treatment liquid.

As a physical property of the pigment ink, the glass transition temperature TgB of the dried film is -20°C or lower. When the glass transition temperature TgB is -20°C or lower, excellent wet-rubbing fastness and washing fastness to a polyester substrate can be achieved. The glass transition temperature TgB can be measured in the same manner as the glass transition temperature TgA of the dried film of the pre-treatment liquid.

Other physical properties of the pre-treatment liquid can be appropriately selected depending on the purpose, and the physical properties of the pigment ink depending on the application method are not particularly limited and can be appropriately adjusted.

### <<Other components>>

Other components are not particularly limited and can be appropriately selected depending on the purpose. Examples thereof include, but are not limited to, a water-soluble organic solvent, a surfactant, a defoaming agent, a preservative/antifungal agent, and a rust inhibitor. The same other components as those used in the pre-treatment liquid can be used.

### <Liquid application method and liquid application apparatus>

A liquid application method according to one embodiment of the present invention includes a pre-treatment liquid application step, a pigment ink application step, and a heating step.

A liquid application apparatus according to one embodiment of the present invention includes a pre-treatment liquid application unit, a pigment ink application unit, and a heating unit.

The liquid application method can be performed by the liquid application apparatus. Further, the pre-treatment liquid application step can be performed by the pre-treatment liquid application unit, the pigment ink application step can be performed by the pigment ink application unit, and the heating step can be performed by the heating unit.

### <<Pre-treatment liquid application step and pre-treatment liquid application unit>>

The pre-treatment liquid application step is a step of applying the pre-treatment liquid including the resin A and the organic acid to a substrate. The pre-treatment liquid used in this step is the same as the pre-treatment liquid included in the ink set for fabric according to one embodiment of the present invention.

The pre-treatment liquid application step is not particularly limited and can be appropriately selected depending on the purpose. Examples thereof include, but are not limited to, an inkjet method, a blade coating method, a gravure coating method, a gravure offset coating method, a bar coating method, a roll coating method, a knife coating method, an air-knife coating method, a comma coating method, a U-comma coating method, an AKKU coating method, a smoothing coating method, a micro-gravure coating method, a reverse-roll coating method, a four-roll coating method, a five-roll coating method, a dip coating method, a curtain coating method, a slide coating method, and a die coating method. Among these, the inkjet method is preferable from the standpoint of being able to apply a small amount uniformly.

### <<Pigment ink application step and pigment ink application unit>>

The pigment ink application step is a step of applying the pigment ink including the resin B to a substrate.

The pigment ink used in this step is the same as the pigment ink included in the ink set for fabric according to one embodiment of the present invention.

The pigment ink application step can be performed, for example, by the same method as used in the pre-treatment liquid application step.

### <<Heating step and heating unit>>

The heating step is a step of drying the pre-treatment liquid and the ink applied to a recording medium, and is performed by the drying unit.

The drying unit is not particularly limited and can be appropriately selected depending on the purpose. Examples thereof include, but are not limited to, hot-air drying, infrared heating, heat-press drying, radiant-heat drying, conductive-heat drying, high frequency drying, and microwave drying. These may be used alone or in combination of two or more types.

When the drying is performed by hot-air drying or heat-press drying, volatile components in the ink efficiently evaporate after the pre-treatment liquid, the ink, and the post-treatment liquid have been applied to the recording medium, which is preferable because the fastness of the recorded matter is improved.

From the standpoint of ensuring that the resin particles included in the pre-treatment liquid form a sufficiently continuous film, the drying temperature is preferably higher than the glass transition temperature (TgA) of the dried solid product of the pre-treatment liquid, more preferably 100°C or higher. Since heat shrinkage, yellowing, color transfer, or the like may occur depending on the substrate, the drying temperature can be appropriately selected within a range that does not cause any visible appearance defect.

From the standpoint of achieving both wet-rubbing fastness and washing fastness at high levels, it is preferable that the heating step is not performed between the pre-treatment liquid application step and the pigment ink application step. Further, from the standpoint of obtaining a recorded matter exhibiting excellent fastness, it is preferable that the heating step is performed after the pigment ink application step. By not performing the heating step between the pre-treatment liquid application step and the pigment ink application step, it is possible to prevent the dried film of the pre-treatment liquid and the dried film of the pigment ink from having a completely separated layer structure, thereby forming a dried film in which the pre-treatment liquid and the pigment ink are mixed appropriately.

### (Recorded matter)

The recorded matter according to one embodiment of the present invention has an image formed on a fabric serving as a substrate by using the ink set according to one embodiment of the present invention and by employing the recording apparatus and the recording method.

Examples of the fabric used in the present disclosure include, but are not limited to, a woven fabric, a knitted fabric, and a nonwoven fabric. Further, examples of a fiber constituting the fabric include a natural fiber such as cotton, rayon, linen, silk, or wool; a semi-synthetic fiber such as acetate or triacetate; and a synthetic fiber such as polyester, polyamide, or acrylic fiber.

### <Recording apparatus and recording method>

The ink set for fabric according to one embodiment of the present invention can be suitably used in various recording apparatuses employing an inkjet recording system, such as, for example, a printer, a facsimile machine, a copier, a printer/fax/copier multifunction machine, and a three-dimensional modeling apparatus.

The term "recording medium" refers to a medium on which the ink or various treatment liquids can temporarily or permanently adhere.

The recording apparatus can include not only a head portion that ejects the ink, but also various units related to feeding, conveying, and discharging the recording medium, as well as various devices such as a pre-treatment device and a post-treatment device.

The recording apparatus and the recording method may include a heating unit used in the heating step and a drying unit used in the heating step. The heating unit and the drying unit include, for example, a unit heating and drying the printed surface or the reverse side of the recording medium. The heating unit and the drying unit are not particularly limited. However, examples thereof that can be used include a hot-air heater and an infrared heater. The heating and drying can be performed before, during, or after printing.

Further, the recording apparatus and the recording method are not limited to those by which meaningful images such as characters or figures are visualized with the ink. For example, they also include an apparatus and method that form a pattern or the like, such as a geometric design, or that create a three-dimensional object.

Further, unless otherwise specified, the recording apparatus includes both a serial-type apparatus, in which the ejection head is moved, and a line-type apparatus, in which the ejection head remains stationary.

Further, the recording apparatus includes not only a desktop-type apparatus, but also a wide-format recording apparatus capable of printing on a recording medium of A0 size, as well as a continuous-feed printer capable of using, for example, continuous paper wound into a roll as a recording medium.

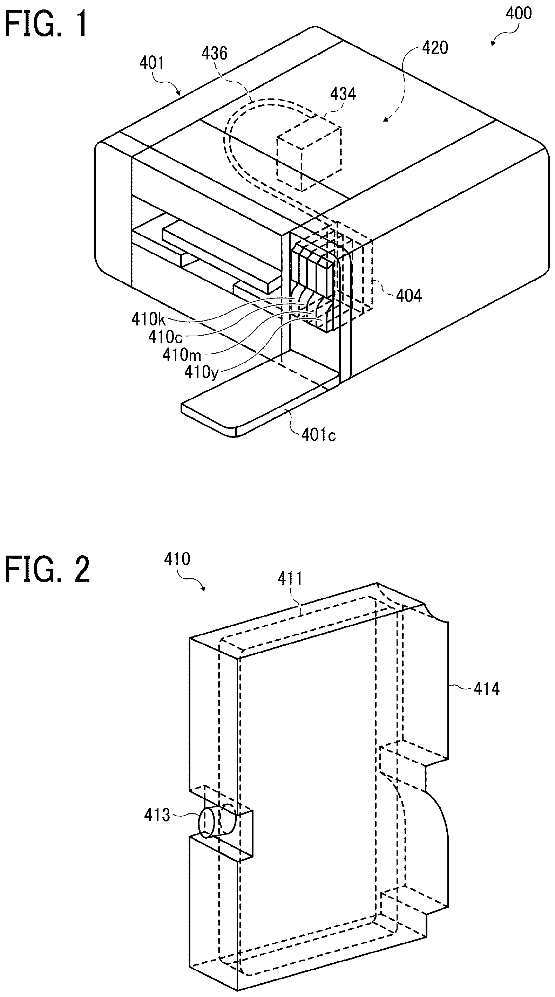

An example of the recording apparatus is described with reference to FIG. 1 and FIG. 2. FIG. 1 is a perspective explanatory view of an example of the apparatus. FIG. 2 is a perspective explanatory view of a main tank. An example of the recording apparatus, namely an image forming apparatus 400 is a serial-type image forming apparatus. A mechanism unit 420 is provided inside an outer casing 401 of the image forming apparatus 400. Each main tank 410 (410k, 410c, 410m, 410y) for color of black (K), cyan (C), magenta (M), or yellow (Y) includes an ink storage unit 411 formed by, for example, a packaging member such as an aluminum-laminate film. The ink storage unit 411 is accommodated, for example, in a storage container case 414 made of plastic. In this manner, the main tank 410 is used as an ink cartridge for each color.

On the other hand, a cartridge holder 404 is provided at the rear side of the opening when a cover 401c of the apparatus main body is opened. The main tank 410 is detachably mounted on the cartridge holder 404. In this manner, an ink ejection port 413 of the main tank 410 communicates with an ejection head 434 for each color through a supply tube 436 for each color, making it possible to eject the ink from the ejection head 434 onto a recording medium.

Further, in the present disclosure, the terms "image formation", "recording", "printing" and the like are used synonymously.

The terms "recording medium", "medium", and "printing material" are used synonymously.

### [Examples]

Embodiments of the present invention is described in more detail below with reference to Examples and Comparative examples. However, embodiments of the present invention are not limited to these examples.

### <Preparation of black pigment dispersion A>

### -Preparation of polymer solution A-

After sufficiently replacing the inside of a 1-L flask equipped with a mechanical stirrer, a thermometer, a nitrogen gas inlet tube, a reflux condenser, and a dropping funnel with nitrogen gas, 11.2 g of styrene, 2.8 g of acrylic acid, 12.0 g of lauryl methacrylate, 4.0 g of polyethylene glycol methacrylate, 4.0 g of styrene macromer, and 0.4 g of mercaptoethanol were mixed, and the mixture was heated to 65°C.

Next, a mixed solution containing 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of styrene macromer, 3.6 g of mercaptoethanol, 2.4 g of azobismethylvaleronitrile, and 18 g of methyl ethyl ketone was added dropwise into the flask over 2.5 hours.

After the dropwise addition, a mixed solution containing 0.8 g of azobismethylvaleronitrile and 18 g of methyl ethyl ketone was added dropwise into the flask over 0.5 hours.

After aging at 65 °C for 1 hour, 0.8 g of azobismethylvaleronitrile was added, followed by further aging for 1 hour. Upon completion of the reaction, 364 g of methyl ethyl ketone was added into the flask, thereby obtaining 800 g of a polymer solution A having a concentration of 50% by mass.

### -Preparation of pigment-containing polymer fine-particle dispersion liquid-

After sufficiently stirring 28 g of the polymer solution A, 42 g of a carbon black pigment (product name: Monarch 800, manufactured by Cabot Corp.), 13.6 g of a 1 mol/L aqueous potassium hydroxide solution, 20 g of methyl ethyl ketone, and 13.6 g of ion-exchanged water, the mixture was kneaded using a roll mill.

The resulting paste was added to 200 g of pure water and sufficiently stirred, and then methyl ethyl ketone and water were distilled off using an evaporator. Further, for removing coarse particles, the dispersion liquid was pressure-filtered through a polyvinylidene fluoride membrane filter having an average pore diameter of 5.0 µm, thereby obtaining a resin-coated black pigment dispersion A having a pigment concentration of 15% by mass and a solid content concentration of 20% by mass.

### <Preparation of black pigment dispersion B>

One hundred grams of carbon black SEAST SP (SRF-LS), manufactured by Tokai Carbon Co., Ltd., was added to 3000 mL of a 2.5 N sodium hypochlorite solution. The mixture was stirred at 60°C and a speed of 300 rpm and reacted for 10 hours to carry out an oxidation treatment, thereby obtaining a pigment having carboxylic acid groups introduced onto the surface of the carbon black.

The reaction mixture was filtered, and the filtered carbon black was neutralized with a sodium hydroxide solution and subjected to ultrafiltration.

Next, the pigment dispersion and ion-exchanged water were subjected to ultrafiltration using a dialysis membrane, followed by ultrasonic dispersion, to concentrate the pigment solid content to 20%, thereby obtaining a self-dispersible black pigment dispersion B.

### <Preparation of urethane resin emulsion B>

In a four-necked flask equipped with a thermometer, a stirring device, a reflux condenser, and a dropping device, 705 parts by mass of a polycarbonate polyol (ETERNACOLL PH-100 manufactured by UBE Corp.) and 352 parts by mass of a polyester obtained by reacting neopentyl glycol, 1,4-butanediol, terephthalic acid, and adipic acid were added, and dehydration under reduced pressure was performed at 120°C.

Next, after cooling to 70°C, 666 parts by mass of ethyl acetate were added, and the mixture was cooled to 50°C and sufficiently stirred and mixed. Subsequently, 280 parts by mass of 4,4'-dicyclohexylmethane diisocyanate and 0.3 parts by mass of stannous octoate were added, and the mixture was caused to react at 70°C for 2 hours.

After completion of the reaction, 30 parts by mass of N-methyl-diethanolamine were added, and the mixture was caused to react for 4 hours to prepare a urethane prepolymer solution having terminal isocyanate groups. Next, 14 parts by mass of hydrazine hydrate were added to the urethane prepolymer solution adjusted to 55°C to carry out a chain-extension reaction for 1 hour.

Thereafter, 1954 parts by mass of ethyl acetate and 31 parts by mass of dimethyl sulfate were added, and the mixture was maintained at 55°C for 1 hour, followed by cooling to 40°C. Then, 3300 parts by mass of ion-exchanged water were added, and the resulting aqueous dispersion was subjected to reduced-pressure distillation to obtain a urethane resin emulsion B.

### <Preparation of urethane resin emulsion C>

A urethane resin emulsion C was obtained in the same manner as in the preparation of the urethane resin emulsion B, except that a polyether polyol (SANNIX GP-250 manufactured by Sanyo Chemical Industries, Ltd.) was used in place of the polycarbonate polyol (ETERNACOLL PH-100 manufactured by UBE Corp.).

### <Preparation of urethane resin emulsion D>

A urethane resin emulsion D was obtained in the same manner as in the preparation of the urethane resin emulsion B, except that a polyester polyol (POLYLITE OD-X-2547 manufactured by DIC Corp.) was used in place of the polycarbonate polyol (ETERNACOLL PH-100 manufactured by UBE Corp.).

### <Preparation of urethane resin emulsion F>

A urethane resin emulsion F was obtained in the same manner as in the preparation of the urethane resin emulsion B, except that a polyester polyol (POLYLITE OD-X-2523 manufactured by DIC Corp.) was used in place of the polycarbonate polyol (ETERNACOLL PH-100 manufactured by UBE Corp.).

### <Preparation of inkjet ink, pre-treatment liquid, and post-treatment liquid>

Pigment inks 1 to 7 and pre-treatment liquids 1 to 10 were obtained by mixing and stirring the materials according to the formulations and blending amounts (% by mass) presented in Tables 1 and 2 below, followed by filtration through a 1.2-µm cellulose acetate filter (MINISART manufactured by Sartorius).

For the resin emulsions and pigments, the addition amounts are presented in terms of the solid contents.

**Table 1**

| | | Pre-treatment liquid preparation example 1 | Pre-treatment liquid preparation example 2 | Pre-treatment liquid preparation example 3 | Pre-treatment liquid preparation example 4 | Pre-treatment liquid preparation example 5 | Pre-treatment liquid preparation example 6 | Pre-treatment liquid preparation example 7 | Pre-treatment liquid preparation example 8 | Pre-treatment liquid preparation example 9 | Pre-treatment liquid preparation example 10 |
|---|---|---|---|---|---|---|---|---|---|---|---|
| Resin A | Urethane resin emulsion A (solid content) | 10.0 | - | - | - | - | 4.0 | - | - | 10.0 | 10.0 |
| | Urethane resin emulsion B (solid content) | - | 5.0 | - | - | - | - | - | - | - | - |
| | Urethane resin emulsion C (solid content) | - | - | 12.0 | - | - | - | - | - | - | - |
| | Urethane resin emulsion D (solid content) | - | - | - | 10.0 | - | - | - | - | - | - |
| | Acrylic resin emulsion A (solid content) | - | - | - | - | 10.0 | - | - | - | - | - |
| | Urethane resin emulsion E (solid content) | - | - | - | - | - | - | 10.0 | - | - | - |
| | Urethane resin emulsion F (solid content) | - | - | - | - | - | - | - | 100 | - | - |
| Organic acids | Citric acid | 9.0 | - | - | - | 9.0 | 9.0 | 9.0 | 9.0 | - | - |
| | Lactic acid | - | 14.0 | - | - | - | - | - | - | - | - |
| | Acetic acid | - | - | 10.0 | - | - | - | - | - | - | - |
| | Formic acid | - | - | - | 15.0 | - | - | - | - | - | - |
| Compounds other than organic acids | Calcium nitrate tetrahydrate | - | - | - | - | - | - | - | - | 9.0 | - |
| | PAA-HCL-01 (as active ingredient) | - | - | - | - | - | - | - | - | - | 9.0 |
| Organic solvents | 1,2-Propanediol | 25.0 | 10.0 | 20.0 | 15.0 | 25.0 | 25.0 | 25.0 | 25.0 | 25.0 | 25.0 |
| | Glycerin | | 10.0 | 5.0 | 10.0 | - | - | - | - | - | - |
| | 1,2-Hexanediol | - | - | 5.0 | 2.0 | - | - | - | - | - | - |
| | Diethylene glycol monobutyl ether | 5.0 | 3.0 | - | 2.0 | 5.0 | 5.0 | 5.0 | 5.0 | 5.0 | 5.0 |
| | Proxel LV | 0.1 | 0.1 | 0.1 | 0.1 | 0.1 | 0.1 | 0.1 | 0.1 | 0.1 | 0.1 |
| Highly pure water | | Rest | Rest | Rest | Rest | Rest | Rest | Rest | Rest | Rest | Rest |
| Total amount | | 100 | 100 | 100 | 100 | 100 | 100 | 100 | 100 | 100 | 100 |
| Glass transition temperature TgA [°C] | | 37 | 12 | 25 | 57 | 33 | 37 | 9 | 62 | 37 | 37 |

**Table 2**

| | | Ink preparation example 1 | Ink preparation example 2 | Ink preparation example 3 | Ink preparation example 4 | Ink preparation example 5 | Ink preparation example 6 | Ink preparation example 7 |
|---|---|---|---|---|---|---|---|---|
| Pigments | Black pigment dispersion A (solid content) | 5.0 | 4.5 | - | 2.5 | 5.0 | 5.0 | 5.0 |
| | Black pigment dispersion B (solid content) | - | - | 4.0 | 2.0 | - | - | - |
| Resin B | Urethane resin emulsion G (solid content) | 15.0 | - | - | - | - | 4.0 | - |
| | Urethane resin emulsion H (solid content) | - | 10.0 | - | - | - | - | - |
| | Urethane resin emulsion I (solid content) | - | - | 5.0 | - | - | - | - |
| | Urethane resin emulsion J (solid content) | - | - | - | 10.0 | - | - | - |
| | Acrylic resin emulsion B (solid content) | - | - | - | - | 15.0 | - | - |
| | Urethane resin emulsion K (solid content) | - | - | - | - | - | - | 15.0 |
| Surfactants | SURFYNOL 440 | 0.5 | | 1.2 | - | - | - | - |
| | SAG-014 | - | 0.5 | - | 0.3 | - | - | - |
| Organic solvents | 1,2-Propanediol | 20.0 | 15.0 | - | 10.0 | 20.0 | 20.0 | 20.0 |
| | Glycerin | 10.0 | - | 25.0 | 10.0 | 10.0 | 10.0 | 10.0 |
| | 1,3-Butanediol | - | 15.0 | - | 10.0 | - | - | - |
| Water | | Rest | Rest | Rest | Rest | Rest | Rest | Rest |
| Total amount | | 100 | 100 | 100 | 100 | 100 | 100 | 100 |
| Glass transition temperature of ink dried solid products [°C] | | -35 | -45 | -21 | -33 | -42 | -35 | -18 |

It should be noted that the urethane resin emulsions B to D and F were prepared by the synthesis methods described above, and the other materials used were commercially available materials as listed below.
·SURFYNOL 440 (acetylene glycol-based surfactant manufactured by Nissin Chemical Co., Ltd.)
·SILFACE SAG-014 (silicone-based surfactant manufactured by Nissin Chemical Co., Ltd.)
·Urethane resin emulsion A: SUPERFLEX 650 manufactured by DKS Co. Ltd.
·Urethane resin emulsion E: HYDRAN CP-7050 manufactured by DIC Corp.
Urethane resin emulsion G: SUPERFLEX E-2000 manufactured by DKS Co. Ltd.
Urethane resin emulsion H: HYDRAN HW-333 manufactured by DIC Corp.
·Urethane resin emulsion I: HYDRAN WLS-221 manufactured by DIC Corp.
Urethane resin emulsion J: PERMARIN UA-368 manufactured by Sanyo Chemical Industries, Ltd.
Urethane resin emulsion K: SUPERFLEX 460 manufactured by DKS Co. Ltd.
·Acrylic resin emulsion A: MOWINYL 352 manufactured by Japan Coating Resin Co., Ltd.
·Acrylic resin emulsion B: MOWINYL FK-284 manufactured by Japan Coating Resin Co., Ltd.

Further, other reagents were purchased from Kanto Chemical Co., Inc. Dried solid products were prepared, and values measured using a DSC system Q-2000 (manufactured by TA Instruments) are presented in the tables as glass transition temperatures.

For Examples 1 to 9 and Comparative examples 1 to 6, evaluations were performed using the combinations of the pre-treatment liquids and the pigment inks presented in Tables 3 and 4. The specific evaluation methods described in Tables 3 and 4 are as follows. The cotton substrate used for evaluation was SILK-FINISH COTTON BROADCLOTH 40 manufactured by shikisensha Co., Ltd., and the polyester substrate was POLYESTER TROPICAL (Teijin Ltd.) manufactured by shikisensha Co., Ltd.

In the evaluation, after the application of the pre-treatment liquid, the pigment ink was applied before performing the heating step. After the application, the heating step was performed by drying for 5 minutes at the temperature listed in the heating temperature column.

However, in Comparative example 6 only, after applying the pre-treatment liquid, the substrate was dried in an oven at 100°C for 5 minutes, and then the pigment ink was applied for evaluation.

### <Wet-rubbing fastness>

In the Examples and Comparative examples, the pigment ink and the pre-treatment liquid were separately filled into a RICOH Ri100 manufactured by Ricoh. After adjusting the deposition amounts of both the pre-treatment liquid and the pigment ink to 20 g/m², a solid image was printed on a printing substrate at 600 × 600 dpi in the order of the pigment ink compositions, and the printed matter was finally dried in a hot-air oven.

The solid images prepared by the above method were subjected to a rubbing fastness test using a Gakushin-type rubbing fastness tester with a wetted cotton cloth set thereon, according to Japanese Industrial Standard (JIS) L0849. The transfer OD to the cotton cloth was measured and judged based on the evaluation criteria below. Ratings of B or higher were considered acceptable.

### [Evaluation criteria]

A: Transfer OD of cotton cloth after test is less than 0.15.
B: Transfer OD of cotton cloth after test is 0.15 or more and less than 0.20.
C: Transfer OD of cotton cloth after test is 0.20 or more.

### <Washing fastness>

Washing fastness was evaluated using solid images prepared in the same manner as for the wet-rubbing fastness evaluation, according to Japanese Industrial Standard (JIS) L0844, Method A-2.

The degree of color fading was evaluated using an X-rite Exact manufactured by X-Rite, Inc., and the color change after the test was expressed as ΔE relative to the pre-test condition. Evaluation was performed based on the following criteria. Ratings of B or higher were considered acceptable.

### [Evaluation criteria]

A: ΔE before and after test is less than 5.
B: ΔE before and after test is 5 or more and less than 10.
C: ΔE before and after test is 10 or more and less than 15.
D: ΔE before and after test is 15 or more.

**Table 3**

| | | Example 1 | Example 2 | Example 3 | Example 4 | Example 5 | Example 6 | Example 7 | Example 8 | Example 9 |
|---|---|---|---|---|---|---|---|---|---|---|
| Pre-treatment liquids | | Preparation example 1 | Preparation example 2 | Preparation example 3 | Preparation example 4 | Preparation example 5 | Preparation example 1 | Preparation example 6 | Preparation example 1 | Preparation example 1 |
| Pigment inks | | Preparation example 1 | Preparation example 2 | Preparation example 3 | Preparation example 4 | Preparation example 1 | Preparation example 5 | Preparation example 1 | Preparation example 6 | Preparation example 1 |
| Heating temperature | | 100°C | 45°C | 130°C | 60°C | 100°C | 100°C | 100°C | 100°C | 35°C |
| Wet-rubbing fastness | Cotton substrate | A | A | A | A | A | B | A | B | B |
| | Polyester substrate | A | A | A | A | B | B | A | B | B |
| Washing fastness | Cotton substrate | A | A | A | A | A | A | B | A | B |
| | Polyester substrate | A | A | A | A | B | A | B | B | B |

**Table 4**

| | | Comparative example 1 | Comparative example 2 | Comparative example 3 | Comparative example 4 | Comparative example 5 | Comparative example 6 |
|---|---|---|---|---|---|---|---|
| Pre-treatment liquids | | Preparation example 7 | Preparation example 8 | Preparation example 1 | Preparation example 9 | Preparation example 10 | Preparation example 1 |
| Pigment inks | | Preparation example 1 | Preparation example 1 | Preparation example 7 | Preparation example 1 | Preparation example 1 | Preparation example 1 |
| Heating temperature | | 100°C | 100°C | 100°C | 100°C | 100°C | 100°C |
| Wet-rubbing fastness | Cotton substrate | A | B | B | B | B | A |
| | Polyester substrate | A | C | C | C | C | A |
| Washing fastness | Cotton substrate | B | A | B | B | B | C |
| | Polyester substrate | C | C | C | D | D | C |

The embodiments of the present invention have been described in detail above. The embodiments described above are merely specific examples for implementing the present invention. The contents of the embodiments do not limit the technical scope of the present invention, and various design modifications such as changes, additions, and deletions of the constituent elements can be made within a scope that does not depart from the spirit of the invention as defined in the claims. New embodiments to which such design modifications have been applied possess the combined advantages of the embodiments and the modifications. In the embodiments, the contents in which such design modifications are possible are emphasized by adding notations such as "of the present embodiment" and "in the present embodiment", but design modifications are also permitted in the contents without such notations. Any combination of the above constituent elements is also valid as an aspect of the present invention.

The present invention includes, for example, the following aspects.

### <Aspect 1>

An ink set for fabric including a pre-treatment liquid including a resin A and an organic acid, and a pigment ink including a resin B, in which:
the glass transition temperature TgA of a dried film of the pre-treatment liquid is 10°C or higher and 60°C or lower, and;
the glass transition temperature TgB of a dried film of the pigment ink is -20°C or lower.

### <Aspect 2>

The ink set for fabric according to the <Aspect 1>, in which the resin A and the resin B are urethane resins.

### <Aspect 3>

The ink set for fabric according to the <Aspect 1> or <Aspect 2>, in which the solid content of the resin A is 5% by mass or more relative to the total amount of the pre-treatment liquid.

### <Aspect 4>

The ink set for fabric according to any one of the <Aspect 1> to <Aspect 3>, in which the solid content of the resin B is 5% by mass or more relative to the total amount of the pigment ink.

### <Aspect 5>

A liquid application method including:
applying, to a substrate, a pre-treatment liquid including a resin A and an organic acid;
applying, to the substrate, a pigment ink including a resin B; and
heating, after the applying of the pigment ink, the substrate to which the pre-treatment liquid and the pigment ink have been applied, in which:
   the glass transition temperature TgA of a dried film of the pre-treatment liquid is 10°C or higher and 60°C or lower;
   the glass transition temperature TgB of a dried film of the pigment ink is -20°C or lower; and
   the heating is performed at a temperature higher than the glass transition temperature TgA.

### <Aspect 6>

A liquid application apparatus including:
the ink set for fabric according to any one of the <Aspect 1> to <Aspect 4>;
a pre-treatment liquid application unit configured to apply the pre-treatment liquid to a substrate; and
a pigment ink application unit configured to apply the pigment ink to the substrate.

### <Aspect 7>

A recorded matter including:
a substrate;
a dried film of a pre-treatment liquid including a resin A and an organic acid on the substrate; and
a dried film of a pigment ink including a resin B on the dried film of the pre-treatment liquid, in which:
   the glass transition temperature TgA of the dried film of the pre-treatment liquid is 10°C or higher and 60°C or lower; and
   the glass transition temperature TgB of the dried film of the pigment ink is -20°C or lower.

Any one of the above-described operations may be performed in various other ways, for example, in an order different from the one described above.

## Claims

1. An ink set for fabric comprising:
a pre-treatment liquid including a resin A and an organic acid; and
a pigment ink including a resin B,
wherein a dried film of the pre-treatment liquid has a glass transition temperature TgA of 10°C or higher and 60°C or lower, and
a dried film of the pigment ink has a glass transition temperature TgB of -20°C or lower.

2. The ink set for fabric according to claim 1, wherein the resin A and the resin B are urethane resins.

3. The ink set for fabric according to claim 1 or 2, wherein the resin A includes solid contents in an amount of 5% by mass or more of the pre-treatment liquid.

4. The ink set for fabric according to any one of claims 1 to 3, wherein the resin B includes solid contents in an amount of 5% by mass or more of the pigment ink.

5. A liquid application method comprising:
applying, to a substrate, the pre-treatment liquid of the ink set according to any one of claims 1 to 4;
applying, to the substrate, the pigment ink of the ink set; and
heating, after the applying of the pigment ink, the substrate to which the pre-treatment liquid and the pigment ink have been applied at a temperature higher than the glass transition temperature TgA.

6. A liquid application apparatus (400) comprising:
the ink set for fabric according to any one of claims 1 to 4;
a pre-treatment liquid application unit (434) configured to apply the pre-treatment liquid to a substrate; and
a pigment ink application unit (434) configured to apply the pigment ink to the substrate.

7. A recorded matter comprising:
a substrate;
a dried film of the pre-treatment liquid of the ink set according to any one of claims 1 to 4 on the substrate; and
a dried film of the pigment ink of the ink set on the dried film of the pre-treatment liquid.
